# EUROPÄISCHE PATENTSCHRIFT

(11) **EP 0 798 484 B1**
(45) Veröffentlichungstag und Bekanntmachung des Hinweises auf die Patenterteilung: **27.06.2001**
(21) Anmeldenummer: 97103664.5
(22) Anmeldetag: 05.03.1997
(51) Int. Cl.: F16F 7/06, F16F 9/12, E05D 11/08

(54) **Rotationsdämpfer**
Rotation damper
Amortisseur rotatif

(30) Priorität: 25.03.1996 DE 19611725
(43) Veröffentlichungstag der Anmeldung: 01.10.1997
(73) Patentinhaber: TRW Automotive Electronics & Components GmbH & Co. KG, 78315 Radolfzell (DE)
(72) Erfinder: Wagner, Jörg, 67663 Karlsruhe (DE)
(74) Vertreter: Schieschke, Klaus, Dipl.-Ing.

(56) Entgegenhaltungen:
- EP-A- 0 779 447
- DE-C- 4 323 095
- DE-U- 9 320 677
- US-A- 4 796 733
- US-A- 4 833 938
- US-A- 4 840 083
- US-A- 4 869 125

## Beschreibung

Die Erfindung bezieht sich auf einen Rotationsdämpfer, mit einem in einem Gehäuse fest angeordneten, aus Kunststoff bestehenden Lagerteil und einem darin angeordneten, mit einer zumindest teilweise um ihre Längsachse drehbaren Welle verbundenen, ebenfalls aus Kunststoff bestehenden Rotorteil, wobei sich zwischen dem Lagerteil und dem Rotorteil eine Dämpfungseinrichtung befindet.

Als Stand der Technik ist bereits ein Rotationsdämpfer bekannt, bei welchem das Gehäuse an seinem Außenumfang mit einem Zahnradteil versehen ist, wobei die Welle des Rotors über eine Kappe hinausragt (DE 43 15 294 A1). Die Kappe ist hierbei hinter einem Vorsprung des Gehäuses verriegelt und befindet sich zwischen einer Abdichtscheibe und einer der Welle zugekehrten Stirnfläche des Rotors. Die der Welle abgekehrte Stirnfläche des Rotors ist mit einem Zwischenraum ausgestattet, in welchem sich viskoses Medium befindet. Der Zwischenraum kann entweder in Form einer geschlossenen Scheibe oder eines Ringes gestaltet sein. Infolge des kleinen Zwischenraumes zur Aufnahme des viskosen Mediums ist damit die Dämpfungswirkung relativ gering.

Zum Stand der Technik zählt weiterhin ein Rotationsdämpfer, bei welchem eine Spiralfeder zwischen einer inneren Begrenzungsfläche der zylindrischen Wand des Gehäuses und einer äußeren Begrenzungsfläche des zylindrischen Rotors angeordnet ist (DE 38 21 982 A1). Diese Anordnung ist bauaufwendig gestaltet, da der Rotor und die entsprechenden benachbarten Teile sowohl die Spiralfeder führen müssen, als auch den Zwischenraum zur Aufnahme des viskosen Mediums erfordern.

Demgegenüber liegt die Aufgabe der vorliegenden Erfindung darin, einen Rotationsdämpfer zu schaffen, welcher unter Vermeidung des Einsatzes von viskosem Medium bei einfacherem Aufbau eine gute Dämpfungsfähigkeit besitzt.

Diese Aufgabe wird erfindungsgemäß dadurch gelöst, daß in dem Lagerteil drehfest ein die Welle umgebendes, aus dämpfendem Kunststoff bestehendes Dämpfungselement angeordnet ist und daß das Rotorteil und/oder das Dämpfungselement jeweils mindestens ein bei Drehen der Welle einen Rotationswiderstand erzeugendes Eingriffsteil aufweist. Durch dieses Eingriffsteil des Dämpfungselements wird im Zusammenwirken mit dem Rotorteil auf einfache Weise eine sehr gute Dämpfung erzielt, ohne daß viskoses Medium eingesetzt werden muß. Das Lagerteil und das Dämpfungselement können hierbei vorteilhafterweise im Zweikomponenten-Spritzverfahren hergestellt werden, wobei außerdem das Eingriffsteil als eine axial zur Welle verlaufende Rippe ausgebildet ist.

In weiterer Ausgestaltung der Erfindung kann das Rotorteil einen in eine umlaufende Ausnehmung des Dämpfungselements ragenden Steg aufweisen, welcher mit mindestens einer axial verlaufenden Rippe versehen ist. Vorzugsweise finden mehrere über den Innen- und Außenumfang verteilt angeordnete Rippen Anwendung. Die Ausnehmung, in welche der Steg eingesetzt wird, kann im Querschnitt trichterförmig ausgebildet sein mit stirnseitig engerem Öffnungsbereich.

Zur Verbindung des Lagerteils mit dem Rotorteil kann ein Bund des Rotorteils eine umlaufende Nut an seinem Außenumfang aufweisen, in welche ein am Innenumfang des Lagerteils angeformter, umlaufender Eingriffsring einlagerbar ist.

Zur Verbindung des Rotorteils mit dem Lagerteil können Rastzonen Anwendung finden, welche beispielsweise über den Umfang der Stirnseite des Rotorteils angeordnet sind und sich in entsprechenden Ausnehmungen des Lagerteils einlagern können.

Um den gesamten Rotationsdämpfer drehgesichert in einer größeren Baueinheit anzuordnen, kann das Lagerteil an seinem Außenumfang mindestens ein Arretierelement aufweisen, welches zur Drehsicherung dient.

Die Erfindung wird nachfolgend anhand eines in der Zeichnung dargestellten Ausführungsbeispiels näher beschrieben. In der Zeichnung zeigen:
- Fig. 1: eine Vorderansicht des Rotationsdämpfers
- Fig. 2: einen Schnitt nach der Linie II-II in Fig. 1
- Fig. 3 u. Fig. 4a, b, c: jeweils perspektivische Ansichten des Lagerteils, des Rotorteils und des Dämpfungselements in Vorder- bzw. in Rückansicht.

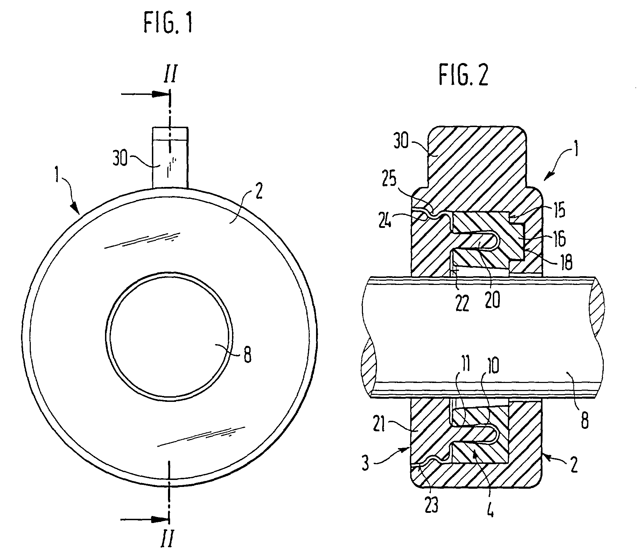

In Fig. 1 und 2 ist ein Rotationsdämpfer 1 dargestellt, welcher im wesentlichen aus einem aus Kunststoff bestehenden Lagerteil 2, einem darin angeordneten Rotorteil 3 und einem zwischen Rotorteil 3 und Lagerteil 2 angeordneten Dämpfungselement 4 besteht. Das Lagerteil 2 läßt sich über ein Arretierelement 30, welches am Außenumfang angeordnet ist, verdrehsicher in einer größeren Baueinheit anordnen. Das Rotorteil 3 ist auf einer drehbaren Welle 8 befestigt.

Wie aus Fig. 2, 3c bzw. 4c hervorgeht, weist das Rotorteil 3 einen Steg 20 auf, welcher bei der in den Figuren dargestellten Ausführungsform an seinem Innenumfang und an seinem Außenumfang verteilt mehrere Rippen 6, 6' besitzt.

Der Steg 20 des Rotorteils 3 ragt in eine Ausnehmung 10 des Dämpfungselements 4. Aus Fig. 2 geht hervor, daß diese Ausnehmung 10 des Dämpfungselements 4 im Querschnitt trichterförmig ausgebildet ist mit stirnseitig engerem Öffnungsbereich 11. Der Steg 20 des Rotorteils 3 kann im Querschnitt rechteckig gestaltet sein.

Die Rippen 6, 6' dienen als Eingriffsteil 5, 5', welche beim Drehen der Welle 8 einen Rotationswiderstand in dem Dämpfungselement 4 erzeugen, und zwar dadurch, daß der Steg 20 mit den Rippen 6, 6' in die Ausnehmung 10 des Dämpfungselements 4 eingreift.

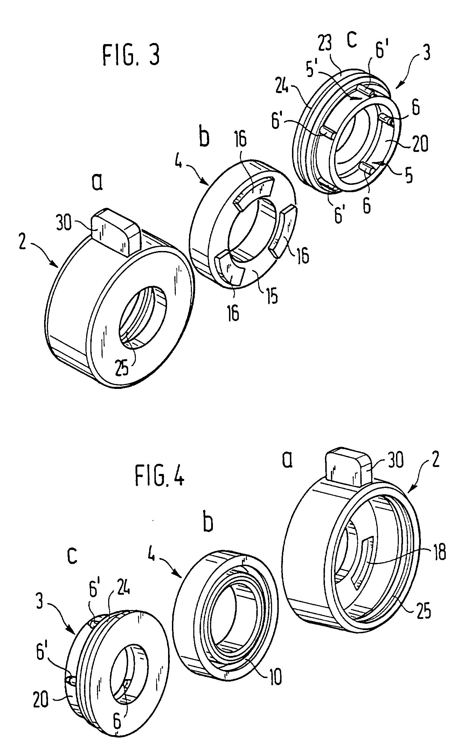

Das Lagerteil und das Dämpfungselement 4 können im Zweikomponenten-Spritzverfahren hergestellt sein. Es besteht außerdem die Möglichkeit, daß das Dämpfungselement 4 an seiner dem Lagerteil 2 abgekehrten Stirnseite 15 eine sich in die angrenzende Fläche des Lagerteils 2 einlagernde Rastzone 16 aufweist. Hierbei ist die Fläche des Lagerteils 2 mit Aussparungen 18 versehen, in welche sich beispielsweise 3 über den Umfang der Stirnseite 15 verteilte Rastzonen nach Fig. 3b bzw. 4a sowie Fig. 2 einlagern können. Hierdurch ist eine formschlüssige Halterung des Dämpfungselements 4 innerhalb des Lagerteils 2 gewährleistet.

Das Rotorteil 3 weist einen mit der Welle 8 verbindbaren, umlaufenden Bund 21 auf, an welcher an einer Stirnseite 22 der Steg angeformt ist. Der Bund 21 ist über seinen Außenumfang 23 mit dem Lagerteil 2 verbindbar. Hierzu besitzt der Bund 21 nach Fig. 2 eine umlaufende Nut 24 an seinem Außenumfang 23, in welcher ein am Innenumfang des Lagerteils 2 angeformter, umlaufender Eingriffsring 25 (Fig. 4a) einlagerbar ist.

Aus Fig. 2 geht hervor, daß das Lagerteil 2 das Dämpfungselement 4 und das Rotorteil 3 überdeckt.

Durch den Eingriff des Steges 20 mit am Außen- und/oder Innenumfang angeordneten Rippen 6 bzw. 6' in die Ausnehmung 10 des Dämpfungselements 4 ergibt sich ein sehr guter Dämpfungswiderstand des Rotorteils 3 gegenüber dem Dämpfungselement 4 bei Drehen der Welle 8 um einen bestimmten Winkelbetrag.

Die gesamte Anordnung ist einfach aufgebaut, wobei auf den Einsatz von viskosem Medium verzichtet werden kann. Der erfindungsgemäße Rotationsdämpfer ist beispielsweise einsetzbar bei einer Klappe eines Handschuhfachs eines Kraftfahrzeuges, bei einem Abschluß für einen Aschenbecher, bei einem schwenkbaren Handgriff bzw. bei Bedienklappen von Hifi-Geräten oder Diktiergeräten.

## Patentansprüche

1. Rotationsdämpfer, mit einem in einem Gehäuse fest angeordneten, aus Kunststoff bestehenden Lagerteil und einem darin angeordneten, mit einer zumindest teilweise um ihre Längsachse drehbaren Welle verbundenen, ebenfalls aus Kunststoff bestehenden Rotorteil, wobei sich zwischen dem Lagerteil und dem Rotorteil eine Dämpfungseinrichtung befindet,
**dadurch gekennzeichnet**,
daß in dem Lagerteil (2) drehfest ein die Welle (8) umgebendes, aus dämpfendem Kunststoff bestehendes Dämpfungselement (4) angeordnet ist und
daß das Rotorteil (3) und/oder das Dämpfungselement (4) jeweils mindestens ein bei Drehen der Welle (8) einen Rotationswiderstand erzeugendes Eingriffsteil (5, 5') aufweist.

2. Rotationsdämpfer nach Anspruch 1, **dadurch gekennzeichnet**, daß das Eingriffsteil (5, 5') als eine axial zur Welle (8) verlaufende Rippe (6, 6') ausgebildet ist.

3. Rotationsdämpfer nach Anspruch 1 und 2, **dadurch gekennzeichnet**, daß das Rotorteil (3) einen in eine umlaufende Ausnehmung (10) des Dämpfungselements (4) ragenden Steg (20) aufweist, welcher mit mindestens einer axial verlaufenden Rippe (6, 6') versehen ist.

4. Rotationsdämpfer nach Anspruch 3, **dadurch gekennzeichnet**, daß der Steg (20) über den Innen- und/oder Außenumfang verteilt mehrere Rippen (6, 6') aufweist.

5. Rotationsdämpfer nach Anspruch 4, **gekennzeichnet durch** drei über den Innen- und/oder Außenumfang verteilte Rippen (6, 6').

6. Rotationsdämpfer nach Anspruch 3 bis 5, **dadurch gekennzeichnet**, daß die Ausnehmung (10) des Dämpfungselements (4) im Querschnitt trichterförmig ausgebildet ist mit stirnseitig engerem Öffnungsbereich (11).

7. Rotationsdämpfer nach Anspruch 3 bis 6, **dadurch gekennzeichnet**, daß der Steg (20) im Querschnitt rechteckig ausgebildet ist.

8. Rotationsdämpfer nach einem der vorhergehenden Ansprüche, dadurch gekennzeichnet, daß das Rotorteil (3) einen mit der Welle (8) verbindbaren umlaufenden Bund (21) aufweist, an welchen an einer Stirnseite (22) der Steg (20) angeformt ist.

9. Rotationsdämpfer nach Anspruch 8, **dadurch gekennzeichnet**, daß der Bund (21) über seinen Außenumfang (23) mit dem Lagerteil (2) verbunden ist.

10. Rotationsdämpfer nach Anspruch 9, **dadurch gekennzeichnet**, daß der Bund (21) eine umlaufende Nut (24) an seinem Außenumfang (23) aufweist, in welcher ein am Innenumfang des Lagerteils (2) angeformter, umlaufender Eingriffsring (25) einlagerbar ist.

11. Rotationsdämpfer nach einem der vorhergehenden Ansprüche, **dadurch gekennzeichnet**, daß das Dämpfungselement (4) an seiner dem Lagerteil (2) zugekehrten Stirnseite (15) mindestens eine, sich in die angrenzende Fläche des Lagerteils (2) einlagernde Rastzone (16) aufweist.

12. Rotationsdämpfer nach Anspruch 11, **gekennzeichnet durch** drei über den Umfang der Stirnseite (15) verteilte Rastzonen (16), welche in entsprechende Aussparungen (18) des Lagerteils (2) einlagerbar sind.

13. Rotationsdämpfer nach einem der vorhergehenden Ansprüche, **dadurch gekennzeichnet**, daß das Lagerteil (2) und das Dämpfungselement (4) im Zweikomponenten-Spritzverfahren hergestellt sind.

14. Rotationsdämpfer nach einem der vorhergehenden Ansprüche, **dadurch gekennzeichnet**, daß das Lagerteil (2) das Dämpfungselement (4) und das Rotorteil (3) überdeckt.

15. Rotationsdämpfer nach einem der vorhergehenden Ansprüche, **dadurch gekennzeichnet**, daß das Lagerteil (2) an seinem Außenumfang mindestens ein Arretierelement (30) aufweist.

## Claims

1. Rotary damper, with a bearing part arranged fixedly in a housing and consisting of plastic and with a rotor part which is arranged in said bearing part, is connected to a shaft rotatable at least partially about its longitudinal axis and likewise consists of plastic, a damping device being located between the bearing part and the rotor part, characterized in that a damping element (4) surrounding the shaft (8) and consisting of damping plastic is arranged fixedly in terms of rotation in the bearing part (2), and in that the rotor part (3) and/or the damping part (4) in each case have at least one engagement part (5, 5') generating rotational resistance during the rotation of the shaft (8).

2. Rotary damper according to Claim 1, characterized in that the engagement part (5, 5') is designed as a rib (6, 6') running axially relative to the shaft (8).

3. Rotary damper according to Claims 1 and 2, characterized in that the rotor part (3) has a web (20) which projects into a peripheral recess (10) of the damping element (4) and which is provided with at least one axially running rib (6, 6').

4. Rotary damper according to Claim 3, characterized in that the web (20) has a plurality of ribs (6, 6') distributed over the inner and/or the outer circumference.

5. Rotary damper according to Claim 4, characterized by three ribs (6, 6') distributed over the inner and/or the outer circumference.

6. Rotary damper according to Claims 3 to 5, characterized in that the recess (10) of the damping element (4) has a funnel-shaped design in cross section, with an opening region (11) which is narrower on the end face.

7. Rotary damper according to Claims 3 to 6, characterized in that the web (20) has a rectangular design in cross section.

8. Rotary damper according to one of the preceding claims, characterized in that the rotor part (3) has a peripheral collar (21) which can be connected to the shaft (8) and on one end face (22) of which the web (20) is integrally formed.

9. Rotary damper according to Claim 8, characterized in that the collar (21) is connected by its outer circumference (23) to the bearing part (2).

10. Rotary damper according to Claim 9, characterized in that the collar (21) has, on its outer circumference (23), a peripheral groove (24), in which a peripheral engagement ring (25) integrally formed on the inner circumference of the bearing part (2) can be introduced.

11. Rotary damper according to one of the preceding claims, characterized in that the damping element (4) has, on its end face (15) facing the bearing part (2), at least one locking zone (16) introducing itself into the adjacent surface of the bearing part (2).

12. Rotary damper according to Claim 11, characterized by three locking zones (16) which are distributed over the circumference of the end face (15) and which can be introduced into corresponding clearances (18) of the bearing part (2).

13. Rotary damper according to one of the preceding claims, characterized in that the bearing part (2) and the damping element (4) are produced by the two-component injection-moulding method.

14. Rotary damper according to one of the preceding claims, characterized in that the bearing part (2) covers the damping element (4) and the rotor part (3).

15. Rotary damper according to one of the preceding claims, characterized in that the bearing part (2) has on its outer circumference at least one detaining element (30).

## Revendications

1. Amortisseur de rotation, comprenant une partie de montage en matière plastique, agencée de façon fixe dans un boîtier, et une partie de rotor agencée à l'intérieur de ladite partie de montage, également en matière plastique et reliée à un arbre susceptible de tourner au moins partiellement autour de son axe longitudinal, et dans lequel il existe un dispositif d'amortissement entre la partie de montage et la partie de rotor,
caractérisé en ce que :
- un élément d'amortissement (4) en matière plastique amortissante (4) est agencé solidairement en rotation dans la partie de montage (2), et entoure l'arbre (8), et
- la partie de rotor (3) et/ou l'élément d'amortissement (4) comprend respectivement au moins une partie d'engagement (5, 5') qui produit une résistance à la rotation lors de la rotation de l'arbre (8).

2. Amortisseur de rotation selon la revendication 1, caractérisé en ce que la partie d'engagement (5, 5') est réalisée sous forme d'une côte (6, 6') qui s'étend axialement par rapport à l'arbre (8).

3. Amortisseur de rotation selon les revendications 1 et 2, caractérisé en ce que la partie de rotor (3) comprend une barrette (20) qui pénètre dans un évidement périphérique (10) de l'élément d'amortissement (4) et qui est pourvue d'au moins une côte (6, 6') qui s'étend axialement.

4. Amortisseur de rotation selon la revendication 3, caractérisé en ce que la barrette (20) comprend plusieurs côtes (6, 6') réparties sur la périphérie intérieure et/ou la périphérie extérieure.

5. Amortisseur de rotation selon la revendication 4, caractérisé par trois côtes (6, 6') réparties sur la périphérie intérieure et/ou la périphérie extérieure.

6. Amortisseur de rotation selon les revendications 3 à 5, caractérisé en ce que l'évidement (10) de l'élément d'amortissement (4) est réalisé en forme d'entonnoir en coupe transversale, avec une zone d'ouverture étroite (11) du côté frontal.

7. Amortisseur de rotation selon les revendications 3 à 6, caractérisé en ce que la barrette (20) est réalisée sous forme rectangulaire en section transversale.

8. Amortisseur de rotation selon l'une des revendications précédentes, caractérisé en ce que la partie de rotor (3) comporte une collerette périphérique (21) susceptible d'être reliée à l'arbre (8) et sur laquelle est formée la barrette (20) sur un côté frontal (22).

9. Amortisseur de rotation selon la revendication 8, caractérisé en ce que la collerette (21) est reliée à la partie de montage (2) sur sa périphérie extérieure (23).

10. Amortisseur de rotation selon la revendication 9, caractérisé en ce que la collerette (21) comporte une gorge périphérique (24) à sa périphérie extérieure (23), dans laquelle peut être mise en place une bague d'engagement périphérique (25) formée à la périphérie intérieure de la partie de montage (2).

11. Amortisseur de rotation selon l'une des revendications précédentes, caractérisé en ce que l'élément d'amortissement (4) comporte, sur son côté frontal (15) tourné vers la partie de montage (2), au moins une zone d'enclenchement (16) qui vient se disposer dans la surface limitrophe de la partie de montage (2).

12. Amortisseur de rotation selon la revendication 11, caractérisé par trois zones d'enclenchement (16) réparties sur la périphérie du côté frontal (15) et qui viennent se disposer dans des évidements correspondants (18) de la partie de montage (2).

13. Amortisseur de rotation selon l'une des revendications précédentes, caractérisé en ce que la partie de montage (2) et l'élément d'amortissement (4) sont produits par un procédé d'injection à deux composants.

14. Amortisseur de rotation selon l'une des revendications précédentes, caractérisé en ce que la partie de montage (2) recouvre l'élément d'amortissement (4) et la partie de rotor (3).

15. Amortisseur de rotation selon l'une des revendications précédentes, caractérisé en ce que la partie de montage (2) comprend au moins un élément d'arrêt (30) à sa périphérie extérieure.
